Europäisches Patentamt

European Patent Office

Office européen des brevets

(19)

(11) Publication number: **0 034 626**
**B1**

# EUROPEAN PATENT SPECIFICATION

(45) Date of publication of patent specification: **09.10.85**

(51) Int. Cl.⁴: **B 23 H 1/02**

(21) Application number: **80901741.1**

(22) Date of filing: **04.08.80**

(86) International application number:
**PCT/US80/00989**

(87) International publication number:
**WO 81/00532 05.03.81 Gazette 81/06**

(54) **CUT-OFF PROTECTION SYSTEM FOR ELECTRICAL DISCHARGE MACHINING APPARATUS.**

(30) Priority: **21.08.79 US 68327**

(43) Date of publication of application:
**02.09.81 Bulletin 81/35**

(45) Publication of the grant of the patent:
**09.10.85 Bulletin 85/41**

(84) Designated Contracting States:
**CH DE FR GB LI**

(56) References cited:
**US-A-3 670 136**
**US-A-3 705 286**
**US-A-3 745 298**
**US-A-3 855 443**
**US-A-4 071 729**

(73) Proprietor: **COLT INDUSTRIES OPERATING CORP**
**Charter Oak Boulevard**
**West Hartford, CT 06101 (US)**

(72) Inventor: **BELL, Oliver A., Jr.**
**1308 Live Oak Parkway**
**Wilmington, NC 28403 (US)**
Inventor: **GILLELAND, Randall C.**
**P.O. Box 68**
**Troutman, NC 28166 (US)**
Inventor: **CHANCE, Davey J.**
**779 Reubens Road**
**Concord, NC 28025 (US)**

(74) Representative: **Tomlinson, Kerry John et al**
**Frank B. Dehn & Co. European Patent Attorneys**
**Imperial House 15-19 Kingsway**
**London WC2B 6UZ (GB)**

Courier Press, Leamington Spa, England.

EP 0 034 626 B1

## Descriotion

The field to which the present invention relates is that generally known as electrical discharge machining, sometimes hereinafter referred to as EDM, in which material is removed from an electrically conductive workpiece by the action of electrical gap discharges occurring between the tool electrode and a workpiece. A dielectric coolant fluid is circulated and recirculated through the gap, usually under pressure, throughout the machining operation. An electrode or a workpiece servo feed system is used to provide relative movement and thus maintain an optimum gap spacing between the electrode and the workpiece as the workpiece material is being removed.

It is important to the process of EDM that the machining power pulses provided at the gap are of closely and precisely controlled on-off time and frequency to ensure repeatability of results and to provide appropriate cutting action for the type of operation being carried out. Various types of pulse generators which have this capability have been developed and are in commercial use for EDM. One commonly used type of EDM power supply includes as a principal part of its machining power pulse generator an astable multivibrator in which on-off time and frequency are controlled and preset by a ganged capacitor and resistor arrangement. One example of this type of pulse generator and an associated protection system is shown and described in Kurt H. Sennowitz, U.S. Patent No. 3,649,802, issued on March 14, 1972 for "Protective System for Electrical Discharge Machining Power Supply Circuit", which patent is of common ownership herewith.

A further arrangement for a digital type EDM pulse generator is shown and described in Oliver A. Bell, Jr., U.S. Patent 3,809,847, issued on May 7, 1974, for "Method and Apparatus for Electrical Discharge Machining".

In electrical discharge machining it is important to provide means which protect against gap short circuits. One such means is described in U.S. 3,670,136 wherein the pause or off times of the power pulses applied to the electrode are incrementally stepped up or down in response to changes in gap voltage indicative of changing working conditions. Such stepping is achieved by means of an arrangement of solenoid switches. However, such an arrangement has the disadvantages of a relatively long response time to changes in gap voltage and in particular to the gap voltage returning to a level indicative of normal operation.

A still further arrangement of digital multivibrator is shown and described in Oliver A. Bell, Jr., U.S. Patent 4,071,729, issued on January 31, 1978, for "Adaptive Control System and Method for Electrical Discharge Machining". This patent shows an on and off time generator which receives inputs from a programmable computer and from this general arrangement provides machining power pulses to the machining gap. A plurality of increased off times are stored, and are substituted for a basic value in the event of the gap voltage falling. This arrangement provides improved response time and sensitivity to changes in working conditions, but has the disadvantage that sharp increases in off time may occur and such increases can reduce the stability of the cut and the efficiency of the machine.

The present invention is particularly designed for use with a digital type pulse generator that is controlled by a programmable computer or similar input device.

According to the invention there is provided a system for gap short circuit protection for electrical discharge machining in an apparatus having a pulse generator including an on time and an off time control means, comprising:

means for sensing gap voltage and providing a digital representation thereof;

means for predetermining an off time value and providing a digital representation thereof;

means for successively multiplying the last mentioned representation by a constant integer and storing a plurality of such products as precomputed off-times in an ordered table of values corresponding to decreasing gap voltage reference levels,

characterised by means operably connected to said sensing means and responsive to a drop in the sensed gap voltage for searching through the table and for substituting said precomputed off-times from said table one after the other in order of their increase in place of said predetermined off-time value until return of the sensed gap voltage to a level indicating normal machining whereupon said off time returns to said predetermined value.

The invention provides a cut-off protection system for EDM which operates in a step function to lengthen off time responsive to drop in gap voltage level indicating gap short circuit conditions. A set of cut-off times is computed each time the off-time is reset by the operator or entered by the operator or by computer control. Each successive off time in the set is doubled or multiplied by four or some other integer to reduce machining current. Thus, in response to a drop in gap voltage, longer cut-off times are substituted in the order of their increase.

An embodiment of the invention will now be described, by way of example only, with reference to the accompanying drawings, wherein:

Figure 1 is a block diagram illustrating an EDM system;

Figure 2 is a graph showing the operation of the cut-off system and illustrating the relationship between gap voltage and pulse off-time; and

Figure 3 is a block diagram drawing showing one programmable computer or microprocessor used in accordance with present invention.

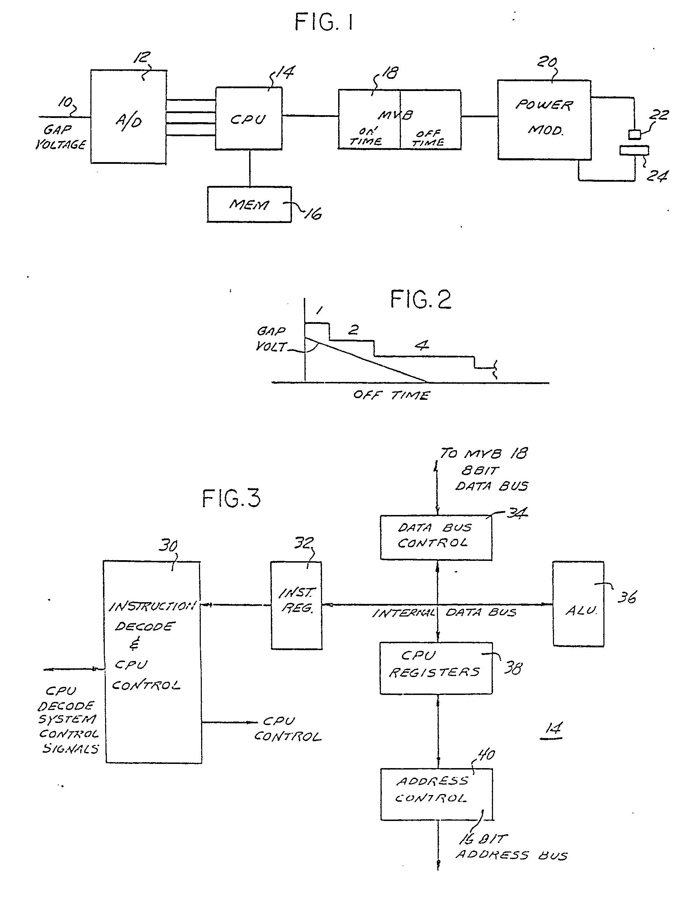

Figure 1 shows the basic parts of a programmable computer and an associated electrical discharge machining apparatus. Gap voltage is sensed by a voltage sensing network 10. The gap voltage is passed through an analog to digital converter 12 and then to the CPU 14 of the programmable computer. The memory 16 of the microprocessor is also shown. One example of a microprocessor suitable for use in connection with this invention is the microprocessor currently manufactured and sold by the Mostek Corporation, 1215 West Crosby Road, Carrollton, Texas 75006 and known as the Model MK 3880.

Also shown in Figure 1 is a digital pulse generator 18 including two counters. One counter is set to represent machining pulse on-time. The other counter is set to represent machining pulse off-time. The EDM power output module is indicated by the numeral 20 and includes the main DC source and an output power switch turned on and off by the pulse generator 18 to provide machining power pulses to the machining gap. The machining gap is defined between a tool electrode 22 and a workpiece 24. The gap voltage signal is shown at the left hand side of the drawing. It is used in the pulse generator 18 to control the off time in a manner that will be further explained hereinafter.

Figure 3 is a block diagram of the major elements in the CPU 14. These include the CPU control 30, internal register 32, data bus control 34, arithmetic logic unit 36, CPU registers 38, and address control 40. The several interfaces and data busses are also shown in the drawing. While the described embodiment of the invention includes elements of a microprocessor, the invention is not limited to this type of computer. A variety of different programmable computers can be used.

The machining pulse off-time and on-time are entered from memory 16 or from an operator keyboard. The protection system operates by modifying only the off-time in response to a drop in gap voltage. The on-time is not altered. This is because the off time is not a factor in overcut or finish. The on time controls peak current and does affect these factors. The gap voltage signal is passed through A/D converter 12 to get an 8 bit representation of gap voltage. A table of references is derived by repeatedly multiplying the off-time by two and loading the resulting products in the cut-off table. This redoubling is repeated until we have a multiplication by 64 times the original off-time. The invention is not limited to the use of a particular ratio. The factor could be four. It is important that the cut-off be controlled in gradual steps rather than abruptly. We have found this type of cut-off improves the stability of cut.

The table of numbers starts with the lowest number. The table is loaded into CPU register 38. The first number is subtracted from the 8 bit digital representation of gap voltage level. If the number resulting from the subtraction is positive, i.e. the reference voltage is smaller than the gap voltage, then we go on to the next step. The original off time is used as the normal cutting parameter. As the gap voltage decreases, the off-time starts doubling until it reaches 64 times its normal amount. Thus, if the off-time were 10 microseconds, we could load up to 640 micro-

seconds of cut-off. This provides a very broad latitude of protection. When cutting is normal and relatively stable, the cutoff values used most often are the times 2 and times 4. If the gap is in a dead short condition, the off time would go to 64 times. As shown in Figure 1, the control signal from the CPU 14 and from the 8 bit data bus is passed to the off-time control counter of the pulse generator 18 to change the off time.

So long as the gap voltage output from A/D converter 12 is greater than the first reference number in the table, we will continue to leave the regular off-time loaded in the off-time counter portion of the pulse generator or multivibrator 18. The first time that we get an A to D conversion with a number that's below the reference number, the pointer in the cut-off table will start searching down the table to see how low it is. As this gap voltage goes lower, the off-time that will be loaded in the off time counter of the pulse generator will be higher. Thus, the magnitude of gap current will be reduced in a gradual stepped rather than a linear manner.

It will therefore be seen, that we have provided a new and improved cut-off protection system for electrical discharge machining.

**Claims**

1. A system for gap short circuit protection for electrical discharge machining in an apparatus having a pulse generator (18, 20) including an on time and an off time control means, comprising:
means (10, 12) for sensing gap voltage and providing a digital representation thereof;
means (16) for predetermining an off time value and providing a digital representation thereof;
means (14) for successively multiplying the last mentioned representation by a constant integer and storing a plurality of such products as precomputed off-times in an ordered table of values corresponding to decreasing gap voltage reference levels:
characterised by means (14) operably connected to said sensing means (10, 12) and responsive to a drop in the sensed gap voltage for searching through the table and for substituting said precomputed off-times from said table one after the other in order of their increase in place of said predetermined off-time value until return of the sensed gap voltage to a level indicating normal machining whereupon said off time returns to said predetermined value.

2. A system as claimed in claim 1 wherein said predetermined off-time value is entered from a programmable computer memory (16).

3. A system as claimed in claim 1 wherein said predetermined off time value is entered from an operator keyboard.

4. A system as claimed in claim 1, 2 or 3, wherein said constant integer is two.

5. A system as claimed in claim 1, 2 or 3 wherein said constant integer is four.

6. A system as claimed in any preceding claim wherein said on and off time control means comprises an on time and off time counter (18).

7. A system as claimed in claim 6 wherein said off time value is entered in said off time counter (18) in digital form.

8. A system as claimed in claim 6 or 7 wherein said means for sensing gap voltage is coupled to an analog to digital converter (12) for placing it in digital form.

## Patentansprüche

1. Vorrichtung zum Schutz gegen Funkenstrecken-Kurzschluß bei einer Funkenerrosionsmaschine, die einen Impulsgenerator (18, 20) mit einer Ein- und Ausschaltsteuerung aufweist, welche folgende Einrichtungen hat:
Eine Meßeinrichtung (10, 12) zum Erfassen der Spannung über der Funkenstrecke mit digitaler Ausgaben dieses Wertes;
eine Einrichtung (16) zum Vorbestimmen eines Ausschaltzeit-Betrages mit digitaler Ausgabe dieses Wertes;
eine CPU-Einrichtung (14) zum aufeinanderfolgenden Multiplizieren des jeweils letzten zur Verfügung stehenden Wertes mit einer ganzzahligen Konstanten und Abspeicherung von einer Vielzahl solcher Produkte als vorberechnete Ausschaltzeiten in einer geordneten Tabelle von Beträgen entsprechend abnehmenden Funkenstrecken-Spannungen als Vergleichsspannungen, dadurch gekennzeichnet, daß die CPU-Einrichtung (14), die mit der Meßeinrichtung (10, 12) in Steuerverbindung steht, auf einen Spannungseinbruch der gemessenen Funkenstrecken-Spannung anspricht, in der Tabelle aufeinanderfolgend die vorberechneten Ausschaltzeiten aus dieser Tabelle einen nach dem anderen ersetzt, um die vorgewählten Ausschaltzeiten zu verlängern und diese vorgewählte Ausschaltzeit zu ersetzen, bis die gemessene Funkenstreckenspannung wieder einen Normalwert angenommen hat, worauf die Ausschaltzeit wieder den vorgewählten Wert einnimmt.

2. Vorrichtung nach Anspruch 1, dadurch gekennzeichnet, daß ein programmierbarer Speicher (16) zum Eingeben eines vorbestimmten Ausschaltzeit-Betrages vorgesehen ist.

3. Vorrichtung nach Anspruch 1, dadurch gekennzeichnet, daß eine Bedien-Tatstatur zum Eingeben eines vorbestimmten Ausschaltzeit-Betrages vorgesehen ist.

4. Vorrichtung nach einem der Ansprüche 1 bis 3, dadurch gekennzeichnet, daß die ganzzahlige Konstante zwei beträgt.

5. Vorrichtung nach einem der Ansprüche 1 bis 3, dadurch gekennzeichnet, daß die ganzzahlige Konstante vier beträgt.

6. Vorrichtung nach einem der Ansprüche 1 bis 5, dadurch gekennzeichnet, daß die Ein- und Ausschaltsteuerung einen Einschalt- und einen Ausschalt-Zähler (18) aufweist.

7. Vorrichtung nach Anspruch 6, dadurch gekennzeichnet, daß der Betrag der Ausschaltzeit in den Ausschalt-Zähler (18) als digitaler Wert eingegeben wird.

8. Vorrichtung nach Anspruch 6 oder 7, dadurch gekennzeichnet, daß die Meßeinrichtung (10) für die Funkenstrecken-Spannung mit einem Analog/Digital-Wandler (12) zur Digitalisierung dieser Meßspannung verbunden ist.

## Revendications

1. Système de protection contre les court-circuits dans l'intervalle pour l'usinage par électro-érosion, dans un appareil comprenant un générateur d'impulsions (18, 20) qui comporte un dispositif de commande de temps d'établissement et de temps de coupure, et comportant un dispositif (10, 12) pour détecter la tension d'intervalle et en produisant une représentation numérique, un dispositif (16) de pré-détermination d'une valeur de temps de coupure et en produisant une représentation numérique, un dispositif (14) qui multiplie successivement ladite dernière représentation mentionnée par un nombre entier constant et qui mémorise plusieurs de ces produits, comme des temps de coupure pré-calculés dans une table ordonnée de valeur correspondant à des niveaux de référence de tension d'intervalles décroissants, caractérisé par un dispositif (14) connecté audit dispositif de détection (10, 12), et réagissant à une chute de la tension d'intervalle détectée pour rechercher dans la table et pour substituer lesdits temps de coupure précalculés de ladite table, l'un après l'autre, dans l'ordre de leur augmentation, à ladite valeur de temps de coupure prédéterminée jusqu'au retour de la tension d'intervalle détectée à un niveau indiquant un usinage normal, auquel cas le temps de coupure est rétabli à ladite valeur prédéterminée.

2. Système selon la revendication 1, dans lequel ladite valeur de temps de coupure prédéterminée est introduite à partir d'une mémoire de calculateur programmable (16).

3. Système selon la revendication 1, dans lequel ladite valeur de temps de coupure prédéterminée est introduite par un clavier d'opérateur.

4. Système selon l'une des revendications 1, 2 ou 3, dans lequel ledit nombre entier est deux.

5. Système selon l'une des revendications 1, 2 ou 3, dans lequel ledit nombre entier est quatre.

6. Système selon l'une quelconque des revendications précédentes, dans lequel ledit dispositif de commande de temps d'établissement et de temps de coupure comporte un compteur de temps d'établissement et de temps de coupure (18).

7. Système selon la revendication 6, dans lequel ladite valeur de temps de coupure est introduite dans ledit compteur de temps de coupure (18) sous forme numérique.

8. Système selon l'une des revendications 6 ou 7, dans lequel ledit dispositif de détection de la tension d'intervalle est couplé avec un convertisseur analogique/numérique (12) pour la convertir en forme numérique.

0 034 626

FIG. 1

FIG. 2

FIG. 3

1